# EUROPÄISCHE PATENTSCHRIFT

(11) **EP 0 866 768 B1**
(45) Veröffentlichungstag und Bekanntmachung des Hinweises auf die Patenterteilung: **22.03.2000**
(21) Anmeldenummer: 96946047.6
(22) Anmeldetag: 06.12.1996
(51) Int. Cl.: C01D 3/16

(54) **VERFAHREN ZUR AUFBEREITUNG VON KIESELSÄUREHALTIGEN ALKALISALZLÖSUNGEN**
PROCESS FOR PREPARING SILICEOUS ALKALI SALT SOLUTIONS
PROCEDE DE PREPARATION DE SOLUTIONS DE SEL ALCALIN SILICEUX

(30) Priorität: 11.12.1995 DE 19546135
(43) Veröffentlichungstag der Anmeldung: 30.09.1998
(73) Patentinhaber: Krupp Uhde GmbH, 44141 Dortmund (DE)
(72) Erfinder: BRÜCKEL, Jürgen, D-06749 Bitterfeld (DE); BERGMANN, Volker, D-06773 Radis (DE); BERNDT, Karlheinz, D-06749 Bitterfeld (DE); WIRTH, Horst, D-06766 Wolfen (DE)
(74) Vertreter: Patentanwälte Meinke, Dabringhaus und Partner
(86) Internationale Anmeldenummer: DE9602337
(87) Internationale Veröffentlichungsnummer: WO9721627

(56) Entgegenhaltungen:
- EP-A- 0 143 962
- DE-A- 2 816 772
- FR-A- 2 622 212
- US-A- 4 274 929

## Beschreibung

Die Erfindung betrifft ein Verfahren zur Aufbereitung von kieselsäurehaltigen Alkalisalzlösungen, vor allem solchen Alkalisalzlösungen, die bei verschiedenen Verfahren als Nebenprodukt anfallen und infolge des relativ hohen Kieselsäuregehaltes bisher nicht in der Chlor-Alkali-Elektrolyse (CAE) eingesetzt werden konnten.

Es ist allgemein bekannt, daß erhöhte Kieselsäuregehalte in den Alkalisalzlösungen für die Chlorelektrolyse sowohl beim Diaphragmaverfahren durch Änderung der Durchlaufcharakteristik des Diaphragmas, als auch beim Membranverfahren durch Abscheidung auf der Austauschermembran aus dem Anodenraum zu verschlechterten Zellparametern führen und so die Effektivität der Chlor-Alkali-Elektrolyse negativ beeinflussen.

Bisher ist es in der Praxis üblich, für die genannten. Chlor-Alkali-Elektrolyse-Verfahren gereinigte Solen aus natürlichen Vorkommen einzusetzen. Die Rohsolen weisen neben den üblichen sonstigen Verunreinigungen eine niedrige, kaum schwankende SiO₂-Konzentration auf.

Um die Rohsole in der Chlor-Alkali-Elektrolyse einsetzen zu können, ist es erforderlich, diese zu reinigen und die Kieselsäure abzutrennen, wobei die SiO₂-Konzentration der gereinigten Rohsole unter 5 mgll liegen muß.

Aus der US-PS 1,992,532 ist ein Verfahren zur Ausfällung von Silicium aus einer alkalischen Sole bekannt, wobei der Sole Magnesiumcarbonat in fein zerteilter Form als Hydrat zugegeben wird und das Reaktionsgemisch auf eine Temperatur von 63 bis 69° C innerhalb einer ausreichenden Zeit erwärmt wird, um kristallines Magnesiumsilikat auszufällen. Mit diesem Verfahren ist es nicht möglich, kieselsäurehaltige Alkalisalzlösungen so zu reinigen, daß diese für einen Einsatz in der CAE verwendet werden können.

Bekannt ist auch ein zweistufiges Verfahren zur kontinuierlichen Reinigung von Alkalichloridsole (DE-AS 12 09 562). In der ersten Stufe wird der Rohsole Kalk in einer Menge von 5,1 kg/m³ Rohsole zugesetzt, um Magnesium auszufällen, als Magnesiumhydroxid in einer sich schnell absetzenden und kompakten Form. In der zweiten Stufe werden durch Zugabe von Alkalicarbonat Kalzium und teilweise auch Sulfationen ausgefällt. Der Nachteil dieses Verfahrens besteht u.a. auch darin, daß die Reinheit der anfallenden Lösung nicht den Anforderungen der CAE genügt.

Ein weiteres Verfahren zur Rohsolereinigung ist in der DE 28 16 772 beschrieben. Zur Ausfällung der Verunreinigungen werden die an sich gebräuchlichen Fällungsmittel zugegeben und die gebildete Suspension wird umgewälzt. Während des gemeinsamen Ausfällens des SiO₂ mit den Verunreinigungen wird der pH-Wert in der Natriumchloridlösung auf einen Wert zwischen 8 und 11 gehalten und es wird ein hochmolekulares Agglomerierungsmittel zugegeben. Die überstehende Lösung wird filtriert und der Gehalt an Calcium-, Magnesium- oder Schwermetallionen der Lösung wird durch den lonenaustausch an einem Chelatharz auf 0,1 ppm oder weniger reduziert. Durch Umwälzen der Aufschlämmung der Fällung aus den Verunreinigungen in der wäßrigen Natriumchloridlösung soll eine Steigerung der Menge des mitausgefällten Siliciumdioxids erreicht werden.

Aus der EP 143 962 A1 ist es bekannt, zur Reinigung von Alkalisalzlösungen Chelataustauscher im pH-Bereich von 2 bis 3 einzusetzen, in dem diese anionaustauschende Eigenschaften aufweisen. In der chemischen Industrie fallen bei verschiedenen Prozessen Alkalisalzlösungen als Nebenprodukte an, die jedoch hohe Kieselsäuregehalte aufweisen. So zum Beispiel bei der Absorption von HCI-haltigen Abgasen, bei der Herstellung von Kieselsäureerzeugnissen (pyrogene Quarzglassynthese), bei Verbrennungsverfahren mit Cl-haltigen Komponenten oder bei Verfahren zur Herstellung von Fällungskieselsäure. Der Kieselsäuregehalt derartiger als Neben- oder Abfallprodukt anfallender Alkalisalzlösungen aus sonstigen technischen Prozessen liegt im Bereich größer 100 mg/l.

Bisher sind keine Verfahren bekannt mit denen es möglich ist, den Kieselsäuregehalt auf einen so niedrigen Wert zu reduzieren, der einen Einsatz derartiger Alkalisalzlösungen in der Chlor-Alkali-Elektrolyse ermöglicht.

Ein Verfahren zur RS-Reinigung ist in der DE 28 16 772 beschreiben.

Zur Ausfällung der Verunreinigungen werden die an sich gebräuchlichen Fällungsmittel zugegeben. In einer Verfahrensvariante (Beispiel 2) wird in einer der üblichen Ausfällung der Verunreinigungen vorgelagerten Stufe durch Zugabe von CaCl₂ oder Ca(OH)₂ Sulfat als Gips ausgefällt. Die gebildete Suspension der gefällten Verunreinigungen wird umgewälzt. Die gefällten Verunreinigungen bestehen aus Magnesiumhydroxid, Kalziumcarbonat, Kalzium- oder Bariumsulfat, Eisenhydroxid usw. bzw. den mehr oder weniger mit ausgefällten SiO₂.

Während des gemeinsamen Ausfällens des SiO₂ mit den Verunreinigungen wird der pH-Wert in der NaCl auf einen Wert zwischen 8 und 11 gehalten und es wird ein hochmolekulares Agglomerierungsmitttel zugegeben. Die Fällung des Kalzium wird so eingestellt (übliche Verfahrensweise), daß ein Wert von 10 ppm erreicht wird.

Auch mit einem Verfahren gemäß der EP 143 962 A1 ist es nicht möglich, im Bereich sehr hoher Salzkonzentrationen den geforderten geringen SiO₂-Restgehalt der Alkalisalzlösungen zu erreichen. Dies gilt um so mehr, wenn Lösungen mit hohen und/oder schwankenden SiO₂--Konzentrationen aufbereitet werden sollen.

Der Erfindung lag die Aufgabe zugrunde, ein Verfahren zur Aufbereitung von kieselsäurehaltigen Alkalisalzlösungen, insbesondere für die Chlor-Alkali-Elektrolyse zu schaffen, mit dem es möglich ist, Alkalisalzlösungen, insbesondere NaCl-Lösungen, mit hohen Kieselsäuregehalten kostengünstig so aufzubereiten, daß diese allein oder in Kombination mit anderen für die Chlor-Alkali-Elektrolyse geeigneten Alkalisalzlösungen in der Chlor-Alkali-Elektrolyse störungsfrei eingesetzt werden können.

Erfindungsgemäß wird die Aufgabe durch die im Anspruch 1 angegebenen Merkmale gelöst. Weitere Ausgestaltungsvarianten des Verfahrens sind in den Unteransprüchen 2 bis 6 angegeben.

Entsprechend der vorgeschlagenen Verfahrensweise erfolgt die Abtrennung der Kieselsäure auf Werte < 5 mgll, insbesondere < 2 mg/l, indem in einer den üblichen Reinigungsstufen vorgeschalteten Stufe der Rohlösung CaCl₂, Ca(OH)₂ oder CaO in einer Menge von 1 bis 5 g/l (gerechnet als CaO) zugesetzt wird, sofern die Rohlösung nicht ohnehin Ca in dieser Menge enthält und der pH-Wert der Lösung so eingestellt wird, daß die Sättigungs-Konzentration von Ca(OH)₂ überschritten wird (sich im System also Ca(OH)₂ im Bodenkörper und Ca⁺ in der Lösung befindet), der Gehalt an löslichem Kalzium (gerechnet als CaO) in der Lösung aber nicht kleiner als 0,1 g/l ist und vorzugsweise 0,5 bis 1, 2g/l beträgt.

Die Einstellung des pH-Wertes erfolgt, falls erforderlich, in Abhängigkeit von der gewählten Form der Kalziumverbindung bzw. von den Parametern der Rohlösung mit Hilfe von Salzsäure bzw. Natronlauge.

Der sich infolge des Zusatzes von Kalzium in der beschriebenen Weise bildende, die abzutrennende Kieselsäure enthaltende, Niederschlag wird weiterhin vor der weiteren Aufbereitung der Rohsole abgetrennt.

Dies kann technisch verschieden ausgeführt werden. Vorteilhafter als eine Totalfiltration der Suspension ist die Flockung des Niederschlages unter Einsatz eines polymeren Flockungshilfsmittels mit anschließender Sedimentation, wobei der geklärte Überstand der weiteren Aufbereitung zugeführt, der anfallende Schlamm einer fest/flüssig Trennung unterworfen und die abgetrennte Flüssigkeit wie der geklärte Überstand behandelt wird.

Unter weiterer Aufbereitung soll die übliche Abtrennung von Kalzium, Magnesium sowie anderer mehrwertiger Metallionen und Sulfat verstanden werden.

Wird dies beispielsweise durch Zusatz von Natronlauge, Natriumcarbonat (carb. Bäderlauge) bzw. Bariumsalz und Sedimentation der gebildeten unlöslichen Verbindungen (mit oder ohne Flockungshilfsmittel) mit anschließender Klarfiltration des Überstandes sowie dessen weiterer Reinigung durch lonenaustauschverfahren und davon getrennter Filtration des Schlammes unter Rückführung des Schlammfiltratanteiles in die Fällungsstufe realisiert, kann die Filtration der Sedimentationsschlämme aus beiden Fällstufen gemeinsam, d.h. im Gemisch durchgeführt werden, ohne daß ein weiterer Filterapparat notwendig wird.

Im allgemeinen wird davon auszugehen sein, daß ein größerer Teil der in der Elektrolyseanlage eingesetzten NaCI-Lösung aus natürlichen Vorkommen stammt. Ergeben sich daraus den Anforderungen entsprechende kieselsäurearme NaCI-Lösungen, wird die Abtrennung der Kieselsäure nur in dem Teilstrom anderer Herkunft mit einer entsprechend höheren Kieselsäurebelastung als Vorbehandlung vorgenommen und der restliche Anteil direkt der Fällstufe für Kalzium zugeführt.

Unabhängig vom Verhältnis der einzelnen Rohlösungen ist nach dem erfindungsgemäßen Verfahren eine gemeinsame Filtration der Sedimentationsschlämme möglich, wenn das Mengenverhältnis im Schlammgemisch so gewählt ist, daß sich in der Flüssigphase ein Gehalt von mindestens 0,1 g/l, vorzugsweise von 0,3 bis 0,5 g/l Kalzium (gerechnet als CaO) im pH-Bereich der Kalziumhydroxidsättigung einstellt. Dies wird erreicht, indem das Sediment der Kieselsäureabtrennung falls erforderlich, nicht kontinuierlich dem Sediment der Metall/Sulfatfällung zwecks gemeinsamer Filtration zugeführt wird, sondern in einem Stapelgefäß gesammelt und schubweise der Filtration zugeleitet wird.

Der Minimalgehalt an Sediment aus der Kieselsäureabtrennung, bei dem sich die o.g. Bedingungen einstellen, d.h. es zu keiner Rücklösung von Kieselsäure kommt, wird durch die angewendeten Überschüsse an Fällungsmittel, insbesondere Karbonat, in der Stufe der Metall/Sulfat-Fällung bestimmt.

Unter praktischen Bedingungen, wobei die Fällmittelüberschüsse gerade so gewählt werden, daß sich bei der Metall/Sulfat-Fällung Werte von 1 bis 3 mgll Ca²⁺ bzw. 0,1 bis 0,5 mgll Mg²⁺ Restlöslichkeit ergeben, sind 10- bis 20-fache Mengen an Sediment aus der Metall/Sulfat-Fällung im Verhältnis zum Sediment der Kieselsäureabtrennung bei der gemeinsamen Filtration zulässig.

Das erfindungsgemäße Verfahren ermöglicht, bei anderen technischen Verfahren zwangsläufig anfallende SiO₂-haltige NaCl-Solen für die Verwendung in der Chlor-Alkali-Elektrolyse aufzubereiten. Das Verfahren ist in seiner Durchführung einfach und es entstehen keine umweltrelevanten Abfallstoffe. Mit dem Verfahren wird zugleich sichergestellt, daß die für die CAE erforderliche Qualität von NaCl-Solen hinsichtlich ihres SiO₂-Gehaltes ohne Einschränkungen gewährleistet ist, um so die einwandfreie Funktion der Elektrolyseapparate zu garantieren bzw. betriebsrelevante negative Effekte auszuschließen, wie sie bei entsprechenden SiO₂-Gehalten nachgewiesenermaßen auftreten.

Weiterhin gelang es mit dem beschriebenen Verfahren, die Möglichkeit zu schaffen, Umweltbelastungen zu vermeiden, indem sonst als Abwasser (bzw. nach Eindampf Festsalzrückstände) anfallende, stark elektroythaltige Lösungen der CAE als Rohstoff zugeführt werden können, wobei die Ableitung stark elektrolythaliger Abwässer schon jetzt problematisch ist und zukünftig nicht mehr möglich sein wird, wodurch zwangsläufig kostenintensive Verfahren zu deren Entfernung eingesetzt werden müssen sowie Konzentrate zu entsorgen sind.

Ein weiterer Vorteil besteht darin, daß im Sinne der allgemein angestrebten Stoffkreislaufwirtschaft zwangsläufig anfallende NaCl-Solen verarbeitet werden können, die ihrerseits in erheblichem Umfang aus dem Einsatz von Produkten der CAE selbst resultieren und so die Akzeptanz einer derartigen Technologie zu erhöhen bzw. zu erhalten. Als Beispiel dafür kann die Aufbereitung von SiO₂-haltigen Absorberlösungen der pyrogenen Quarzglassynthese angeführt werden.

In die Synthese gehen als Produkte der CAE Wasserstoff bzw. über die Herstellung von Siliziumtetrachlorid Chlor ein. Der sich mit der Synthese ergebende HCl-haltige Abgasstrom wird in Natronlauge (wiederum ein Produkt der CAE) absorbiert. Die resultierende NaCl-Absorberlösung wird mit dem beschriebenen Verfahren gereinigt, um schließlich wiederum der CAE zugeführt zu werden.

Die Erfindung soll nachstehend an einigen Beispielen erläutert werden.

### Beispiel 1

### 1. Rohsolezusammensetzung

a) aus Steinsalzvorkommen:

| | |
|---|---|
| SiO2 | 3 mg/l |
| NaCl | 290 g/l |
| Mg | 50 mg/l |
| Ca | 2 g/l |

b) aus der Absorption eines HCl/SiO₂-haltigen Abgases:

| | |
|---|---|
| SiO₂ | 174 mg/l |
| NaCl | 290 g/l |
| Mg | --- |
| Ca | 10 mg/l |
| pH | 11.7 |

Anteil an NaCI-Einsatz der Elektrolyse

| | |
|---|---|
| Lösung (a): | 95 % |
| Lösung (b). | 5 % |

Nach Zusatz von 2,4 g/l Kalkhydrat zur Lösung (b) sowie 15 minütigem Rühren werden ca. 3 mg/l eines mittelanionischen Polyacrylamides in konditionierter Form zugegeben und nach dessen Verteilung ca. 10 min. langsam weitergerührt mit anschließender Sedimentation der Feststoffe. Die anfallende Schlammenge betrug ca. 5 % des Suspensionsvolumens, der Ca²⁺-Gehalt im klaren Überstand 0,7 g/l CaO, der Kieselsäuregehalt 1,8 mgll SiO₂ bei einem pH-Wert von 12,4.

Nach Abziehen des Überstandes wurde die Schlammphase im Verhältnis 1 : 10 mit Schlamm aus der Metall/Sulfat-Fällung vermischt und filtriert.

Im Filtrat befinden sich 0,35 g/l CaO sowie 1,6 mg/l SiO₂ (Fällmittelgehalt in der Flüssigphase des Schlammes aus der Metall/Sulfat-Fällung: 0,25 g/l NaOH, 0,65 g/l Na₂CO₃).

### Beispiel 2

Es fällt eine alkalische Absorberlösung folgender Zusammensetzung an:

| | |
|---|---|
| NaCl | 302 g/l |
| SiO₂ | 78 mg/l |
| NaOH | 2,15 g/l |

Der Lösung wird 30 %ige CaCl₂-Lösung in einer Menge von 3 g/l gerechnet als CaO zugesetzt und im Übrigen wie im Beispiel 1 verfahren.

Der klare Überstand nach Sedimentation des Ca-SiO₂-Niederschlages enthält 1,8 mg/l SiO₂.

### Beispiel 3

Es fällt eine alkalische Absorberlösung folgender Zusammensetzung an:

| | |
|---|---|
| NaCl | 290 g/l |
| SiO₂ | 53 mg/l |
| NaOH | 22 g/l |

Der Lösung wird 16,2 g/l HCI sowie anschließend 2,5 g/l Kalkydrat gerechnet als CaO zugesetzt und im übrigen wie im Beispiel 1 verfahren.

Nach der Behandlung mittels Flockungshilfsmittel sowie Sedimentation des gebildeten Niederschlages werden im klaren Überstand 0,9 mg/l SiO₂ ermittelt.

### Vergleichsbeispiel 1

Entsprechend der Verfahrensweise gemäß der DE 28 16 772 werden 500 l Rohsole üblicher Qualität (Lösung a, Beispiel 1) sowie 50 l Absorberlösung (Lösung b, Beispiel 1) gemischt, wobei eine SiO₂-Konzentration von 20,2 mg/l entsteht, und mit carbonisierter Bäderlauge (NaOH, Na₂-CO₃-haltige NaCl-Lösung) versetzt.

Der Niederschlag wird sedimentiert und der Schlamm auf eine Feststoffkonzentration von 153 g/l eingedickt. Die überstehende NaCl-Lösung wird filtriert und analysiert. Es ergeben sich:

| | |
|---|---|
| pH | 10.5 |
| Ca | 3,2 mg/l |
| SiO₂ | 12,6 mg/l |

10 l einer entsprechenden Mischlösung (s.o., SiO₂ = 20 mg/l) werden wiederum mit carbonisierter Bäderlauge, aber zusätzlich und zeitgleich mit eingedicktem Schlamm versetzt. Dabei wird soviel Schlamm eingesetzt, daß sich in der Suspension die 20-fache Feststoffkonzentation im Vergleich zur einfachen Fällung befindet.

Nach Sedimentation und Filtration wurden für die so behandelte Mischlösung folgende Werte ermittelt:

| | |
|---|---|
| pH | 10.5 |
| Ca | 3,4 mg/l |
| SiO₂ | 13, 3 mg/l |

Die in der DE 28 16 772 beschriebene Verfahrensweise ist schon bei relativ geringen Anteilen Absorberlösung (relativ geringe SiO₂-Konzentration) ungeeignet. Für reine Absorberlösungen entsprechender oder ähnlicher Zusammensetzung bzw. Herkunft ist diese Verfahrensweise überhaupt nicht anwendbar.

## Patentansprüche

1. Verfahren zur Aufbereitung von kieselsäurehaltigen Alkalisalzlösungen für die Chlor-Alkali-Elektrolyse durch Zugabe von NaOH, Na₂CO₃, BaCl₂, BaCO₃ und/oder FeCl₃, CaCl₂ oder Ca(OH)₂ als Fällungsmittel zur Abtrennung der in den Rohlösungen enthaltenen Verunreinigungen, dadurch gekennzeichnet, daß die Rohlösungen in einer gesonderten, den üblichen Reinigungsstufen vorgeschalteten Stufe behandelt werden, wobei die jeweilige Rohlösung auf einen Ca-Gehalt von 1 bis 5 g/l, gerechnet als CaO, und auf einen die Sättigungskonzentration von Ca(OH)₂ überschreitenden pH-Wert eingestellt wird, der Gehalt an löslichem Kalzium, gerechnet als CaO, in der Rohlösung auf einen Wert von 0,1 g/l bis 1,2 g/l gehalten wird, und der sich infolge des Kalziumgehaltes bildende, die Kieselsäure enthaltende Niederschlag von der Alkalisalzlösung abgetrennt wird.

2. Verfahren nach Anspruch 1, dadurch gekennzeichnet, daß zur Einstellung des pH-Wertes in Abhängigkeit von der zugesetzten Kalziumverbindung und den Parametern der Rohlösung Salzsäure oder Natronlauge zugegeben wird.

3. Verfahren nach einem der Ansprüche 1 oder 2, dadurch gekennzeichnet, daß die Abtrennung des die Kieselsäure enthaltenden Niederschlages von der Alkalisalzlösung durch Flockung des Niederschlages unter Verwendung eines polymeren Flockungshilfsmittels mit anschließender Sedimentation erfolgt, wobei der geklärte Überstand der nachfolgenden Reinigungsstufe zugeführt wird und der anfallende Schlamm einer fest/flüssig Trennung unterzogen wird und die abgetrennte Flüssigkeit der nachfolgenden Reinigungsstufe für die Alkalisalzlösung zugeführt wird.

4. Verfahren nach einem der Ansprüche 1 bis 3, dadurch gekennzeichnet, daß die aus der vorgeschalteten Stufe der Abtrennung der Kieselsäure erhaltene kieselsäurearme Rohlösung mit einem Kieselsäuregehalt von kleiner als 5 mgll mindestens einer kieselsäurearmen Rohlösung anderer Herkunft zugesetzt wird und das Gemisch der verschiedenen Rohlösungen einer gemeinsamen weiteren Aufbereitung durch Abtrennung von Kalzium, Magnesium sowie anderer mehrwertiger Metallionen und Sulfat unterzogen wird.

5. Verfahren nach einem der Ansprüche 1 bis 4, dadurch gekennzeichnet, daß die Sedimentationsschlämme der fest/flüssig Trennung aus der vorgeschalteten Stufe zur Abtrennung der Kieselsäure und einer oder mehrerer nachfolgender Reinigungsstufen für die Alkalisalzlösung zu einem Gemisch zusammengefaßt werden und dieses Gemisch filtriert wird.

6. Verfahren nach Anspruch 5, dadurch gekennzeichnet, daß das Sediment aus der Kieselsäureabtrennung dem Sediment der Metall/Sulfatfällung diskontinuierlich zugeführt wird, um zu gewährleisten, daß sich in der Flüssigphase ein Gehalt von mindestens 0,1 g/l Kalzium, gerechnet als CaO, im pH-Bereich der Kalziumhydroxidsättigung einstellt und eine Rücklösung von Kieselsäure vermieden wird.

## Claims

1. A method of treating silica-bearing alkali metal salt solutions for alkali metal chloride electrolysis by the addition of NaOH, Na₂CO₃, BaCl₂, BaCO₃ and/or FeCl₃, CaCl₂ or Ca(OH)₂ as precipitation agents for separation of the impurities contained in the raw solutions, characterised in that the raw solutions are treated in a separate stage which precedes the usual purification stages, wherein the respective raw solution is set to a Ca-content of 1 to 5 g/l, calculated as CaO, and to a pH-value exceeding the saturation concentration of Ca(OH)₂, the content of soluble calcium, calculated as CaO, in the raw solution is kept to a value of 0.1 g/l to 1.2 g/l, and the precipitate which forms as a result of the calcium content and which contains the silica is separated from the alkali metal salt solution.

2. A method according to claim 1 characterised in that hydrochloric acid or soda lye is added to adjust the pH-value in dependence on the added calcium compound and the parameters of the raw solution.

3. A method according to one of claims 1 and 2 characterised in that separation of the precipitate containing the silica from the alkali metal salt solution is effected by flocculation of the precipitate using a polymeric flocculating aid with subsequent sedimentation, wherein the clarified supernatent substance is fed to the subsequent purification stage and the slurry which occurs is subjected to a solid/liquid separation operation and the liquid which is separated off is fed to the subsequent purification stage for the alkali metal salt solution.

4. A method according to one of claims 1 to 3 characterised in that the raw solution which has a low silica content and which is obtained from the preceding stage of separation of the silica, with a silica content of less than 5 mg/l, is added to at least one raw solution with a low silica content of different origin, and the mixture of the various raw solutions is subjected to a common further treatment operation by separation of calcium, magnesium, and other polyvalent metal ions and sulphate.

5. A method according to one of claims 1 to 4 characterised in that the sedimentation slurries from the solid/liquid separation operation from the preceding stage for separation of the silica and one or more subsequent purification stages for the alkali metal salt solution are combined to form a mixture and said mixture is filtered.

6. A method according to claim 5 characterised in that the sediment from the silica separation operation is discontinuously added to the sediment from the metal/sulphate precipitation operation in order to ensure that in the liquid phase a content of at least 0.1 g/l of calcium, calculated as CaO, is set in the pH-range of calcium hydroxide saturation and re-dissolution of silica is avoided.

## Revendications

1. Procédé de traitement de solutions de sel alcalin contenant de l'acide silicique pour l'électrolyse à l'alcali et au chlore par addition de NaOH, Na₂CO₃, BaCl₂, BaCO₃ et/ou FeCl₃, CaCl₂ ou Ca(OH)₂ comme précipitant pour la séparation des impuretés contenues dans les solutions brutes, caractérisé en ce que les solutions brutes sont traitées dans une étape séparée située en amont des étapes de purification usuelles, où chaque solution brute est réglée à une teneur en Ca de 1 à 5 g/l, calculée en CaO, et à un pH dépassant la concentration à saturation de Ca(OH)₂, la teneur en calcium soluble, calculée en CaO, de la solution brute est maintenue à une valeur de 0,1 g/l à 1,2 g/l et le précipité contenant l'acide silicique qui se forme par suite de la teneur en calcium est séparé de la solution de sel alcalin.

2. Procédé selon la revendication 1 caractérisé en ce que, pour ajuster le pH en fonction du composé du calcium ajouté et des paramètres de la solution brute, on ajoute de l'acide chlorhydrique ou de la lessive de soude.

3. Procédé selon l'une des revendications 1 et 2 caractérisé en ce que la séparation du précipité contenant l'acide silicique d'avec la solution de sel alcalin a lieu par floculation du précipité au moyen d'un auxiliaire de floculation polymère et sédimentation subséquente, où le surnageant clarifié est envoyé à l'étape de purification suivante et la boue qui se forme est soumise à une séparation solide/liquide et le liquide séparé est envoyé à l'étape de purification suivante pour la solution de sel alcalin.

4. Procédé selon l'une des revendications 1 à 3 caractérisé en ce que la solution brute pauvre en acide silicique obtenue à partir de l'étape de séparation de l'acide silicique située en amont, qui a une teneur en acide silicique inférieure à 5 mg/l, est ajoutée à au moins une solution brute pauvre en acide silicique d'une autre origine et le mélange des différentes solutions brutes est soumis à un traitement subséquent commun par séparation du calcium, du magnésium ainsi que d'autres ions métalliques plurivalents et du sulfate.

5. Procédé selon l'une des revendications 1 à 4 caractérisé en ce que les boues de sédimentation de la séparation solide/liquide provenant de l'étape pour la séparation de l'acide silicique située en amont et d'une ou plusieurs étapes de purification subséquentes pour la solution de sel alcalin sont rassemblées en un mélange et ce mélange est filtré.

6. Procédé selon la revendication 5 caractérisé en ce que le sédiment provenant de la séparation de l'acide silicique est envoyé de manière discontinue au sédiment de la précipitation des métaux/du sulfate pour garantir qu'une teneur d'au moins 0,1 g/l de calcium, calculée en CaO, s'établit dans la phase liquide dans le domaine de pH de la saturation en hydroxyde de calcium, et qu'une redissolution de l'acide silicique est évitée.
